Europäisches Patentamt

European Patent Office

Office européen des brevets

(19)

(11) Veröffentlichungsnummer: **0 068 477**
**B1**

(12) **EUROPÄISCHE PATENTSCHRIFT**

(45) Veröffentlichungstag der Patentschrift:
09.10.85

(51) Int. Cl.⁴: **A 01 B 35/30,** B 23 P 15/00,
F 16 C 11/04

(21) Anmeldenummer: **82105695.9**

(22) Anmeldetag: **28.06.82**

(54) **Langgestreckter Lenker oder dgl. in Form eines Hohlprofils, insb. für landwirtschaftliche Geräte.**

(30) Priorität: 29.06.81 US 278524

(43) Veröffentlichungstag der Anmeldung:
05.01.83 Patentblatt 83/01

(45) Bekanntmachung des Hinweises auf die Patenterteilung: 09.10.85 Patentblatt 85/41

(84) Benannte Vertragsstaaten:
DE FR GB SE

(56) Entgegenhaltungen:
CH-A-   571 173
DE-A- 2 907 414
FR-A- 2 032 067
FR-A- 2 427 764
GB-A- 1 299 943
US-A- 2 983 167

(73) Patentinhaber: DEERE & COMPANY
1 John Deere Road
Moline Illinois 61265 (US)

(72) Erfinder: Winter, David Carl
5550 N.W. 57th Avenue
Des Moines Iowa 50323 (US)

(74) Vertreter: Fricke, Joachim, Dr. et al
Dr. R. Döring, Dr. J. Fricke, Patentanwälte Josephspitalstrasse 7
D-8000 München 2 (DE)

## Beschreibung

Die Erfindung betrifft einen langgestreckten Lenker oder dgl., insb. an landwirtschaftlichen Geräten, mit den Merkmalen des Oberbegriffs des Anspruchs 1.

Ein Lenker dieser Art ist aus der FR-A-2427764 bekannt. An den zueinander parallelen Seitenwänden des Hohlprofils sind in Fluchtung miteinander stehende ringförmige Lippen zum Inneren des Hohlprofils hin ausgeformt, in die die Enden eines Lagerzapfens eingreifen und dort festgelegt sind. Der Lagerzapfen dient im bekannten Falle zum Anlenken weiterer Lenker. Die einander zugewandten freien Stirnflächen der ringförmigen Lippen ragen über die Innenflächen der Seitenwände nach innen hinaus und dienen als axial gerichtete Anschläge für den auf dem Schwenkzapfen drehbaren Lenker. Die Stabilität der ringförmigen Lippen und ihr Abnutzungswiderstand sind dabei von der Dicke und der Art des Materials abhängig, aus dem der Lenker hergestellt ist. Ihr Verformungswiderstand wird ebenfalls von der Dicke des Wandmaterials des Lenkers und zusätzlich von der Stärke des Schwenk- oder Verbindungszapfens bestimmt. Dadurch sind der Anwendung dieser Lenkerausbildung Grenzen gesetzt. Außerdem müssen bei Verformungen und Abnutzungen die Lenker als ganzes ersetzt werden.

Es ist Aufgabe der Erfindung einen langgestreckten Lenker mit den Merkmalen des Oberbegriffs des Anspruchs 1 so weiterzubilden, daß die Gelenkverbindung wesentlich stabiler und damit höher belastbarer und ihre Verformungs- und Abnutzungswiederstände wesentlich größer als bei dem bekannten Lenker sind, und daß bei geringen Herstellungskosten im Falle eines auftretenden Verschleißes nicht der ganze Lenker ausgetauscht zu werden braucht.

Diese Aufgabe wird dadurch gelöst, daß in jede ringförmige Lippe eine Lagerbuchse zur Aufnahme des Schwenk- oder Verbindungszapfens oder dgl. einsetzbar ist, deren axial äußere Stirnfläche mit der Außenfläche der Seitenwand günstig liegt, deren dieser Stirnfläche naher Außenumfang dem Umriß der trichterförmigen Verengung entsprechend ausgebildet ist und der nahe seiner inneren Stirnfläche einen über die Stirnfläche der Lippe nach innen vorspringenden zylindrischen Abschnitt aufweist. Durch die Lagerbuchse wird die ringförmige Lippe weit über die Festigkeit der Wanddicke des Lenkers verstärkt. Die Lippe kann in ihrem Querschnitt wesentlich günstiger gekrümmt ausgebildet sein, ohne daß die zylindrische Stütz- und Lagerfläche für den Schwenk- oder Verbindungszapfen an Ausdehnung Einbuße erleidet. Damit erhält die Lippe selbst eine größere Stabilität. Diese wird noch dadurch vergrößert, daß der lichte Durchmesser der Lippe wesentlich größer als der Durchmesser des Schwenk- oder Verbindungszapfens sein kann, da der Durchmesserunterschied durch die Lagerbuchse ausgeglichen wird. Die Lagerbuchsen können mit ihren einander zugewandten Stirnflächen die axiale Lagebestimmung für den über den Schwenk- oder Verbindungszapfen mit dem Lenker verbundenen Teil übernehmen. Auch ihre außenliegenden Stirnflächen können mit den anliegenden Flächen anderer, relativ zum Lenker beweglicher Teile zusammenwirken, so daß sämtliche Verschleißstellen an den Lagerbuchsen vorliegen und nicht an den Lippen oder anderen Teilen des Lenkers. Bei tatsächlich auftretendem Verschleiß können die Lagerbuchsen leicht ausgewechselt werden, da sie nur lose in die Lippen eingelegt zu sein brauchen. Wegen der Verstärkung der Lippen durch die Lagerbuchse kann die Wandstärke des Lenkers klein und dessen Gewicht gering gehalten werden.

Vorteilhafterweise weisen die Lagerbuchsen einen maximalen Durchmesser auf, der größer als die Hälfte der Abmessung des Lenkers ist, gemessen senkrecht zur Längsrichtung des Lenkers. Damit tragen die entsprechend großen ringförmigen Lippen und die Lagerbuchsen wesentlich dazu bei, die Querschnittsstabilität des Lenkers im Bereich der Anlenkstelle zu vergrößern.

Jede Lagerbuchse ist zweckmäßigerweise ein einstückiger Teil aus einem ölimprägnierten, abnutzungsfesten Material. Dies erhöht wesentlich die Lebensdauer der Gelenkverbindung.

Die Lagerflächen können wesentlich vergrößert und die Abnutzungserscheinungen verkleinert werden, wenn der Schwenk- oder Verbindungszapfen undrehbar in der Lagerbuchse aufgenommen und Letztere drehbar in der ringförmigen Lippe angeordnet ist.

Die beiden Lagerbuchsen lassen sich jeweils leicht von außen in die Lippen einlegen und zwischen den den Lenker aufnehmenden Teilen eines Gerätes und mit Hilfe des hindurchgeführten Schwenk- oder Verbindungszapfens oder dgl. zuverlässig an Ort und Stelle halten. Irgendwelche zusätzlichen Abnutzungsglieder als Lagerelemente werden nicht benötigt. Die Anordnung läßt sich außerdem leicht und billig herstellen.

Die Erfindung wird nachfolgend anhand schematischer Zeichnungen an mehreren Ausführungsbeispielen näher erläutert.

Es zeigen :

Figur 1 in perspektivischer Ansicht und im Ausschnitt ein landwirtschaftliches Gerät in Form eines Kultivators mit Lenkern, die gemäß der Erfindung ausgebildet sind.

Figur 2 in perspektivischer Ansicht und größerem Maßstabe die Endansicht eines Lenkers gemäß der Erfindung und

Figur 3 in auseinandergezogener Darstellung und im Querschnitt die Anlenkstelle des Lenkers nach Figur 2.

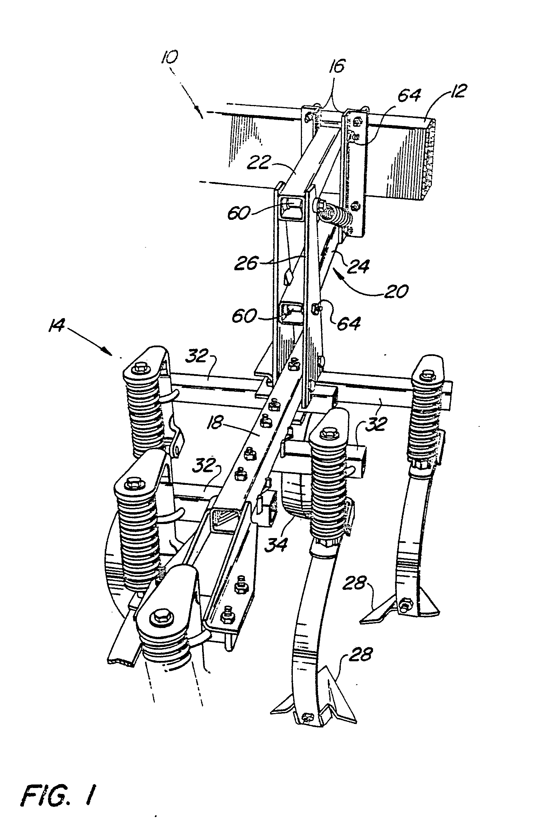

In Fig. 1 ist ein Abschnitt eines Kultivators für in Reihen stehendes Erntegut gezeigt und mit 10 bezeichnet. Er umfaßt einen Hauptquerträger 12, der an ein Zugfahrzeug, z. B. mittels der Dreipunktanhängung (nicht gezeigt) an einen Ackerschlepper anmontiert werden kann, um über ein Feld bewegt zu werden, auf dem in Reihen gepflanztes Erntegut vorgesehen ist. Mehrere Trageinrichtungen 14 für entsprechende Bodenbearbeitungsgeräte sind rückseitig von dem Querträger 12 durch entsprechende Halter 16 unterstüzt. Jede Befestigungseinrichtung umfaßt einen sich in Fahrtrichtung erstreckenden Träger 18, der durch ein Gestänge 20 nach Art eines Gelenkvierecks mit oberen und unteren zueinander parallelen Lenkern 22 und 24 unterstützt ist, die an den entgegengesetzten Enden an der Halterung 16 bzw. an zwei Kupplungsplatten 26 angebracht sind, die in gegenseitigen Abstand auf entgegengesetzten Seiten der hinteren Enden der Lenker 22 und 24 angeordnet sind. Die Platten 26 sind an dem Träger 18 starr festgeschraubt. Den Boden bearbeitende Werkzeuge 28, die zur Auflockerung des Bodens zwischen jeweils zwei Pflanzreihen dienen, werden an Querarmen 32 unterstützt, die mit dem Träger 18 verbunden sind. Ein die Bodeneindringtiefe bestimmendes Rad 34 hält den Träger 18 in einem vorbestimmten Abstand über dem Grund. Das Gestängeviereck 20 gibt nach, so daß das Bodenabtastrad der Kontur des Bodens folgen kann.

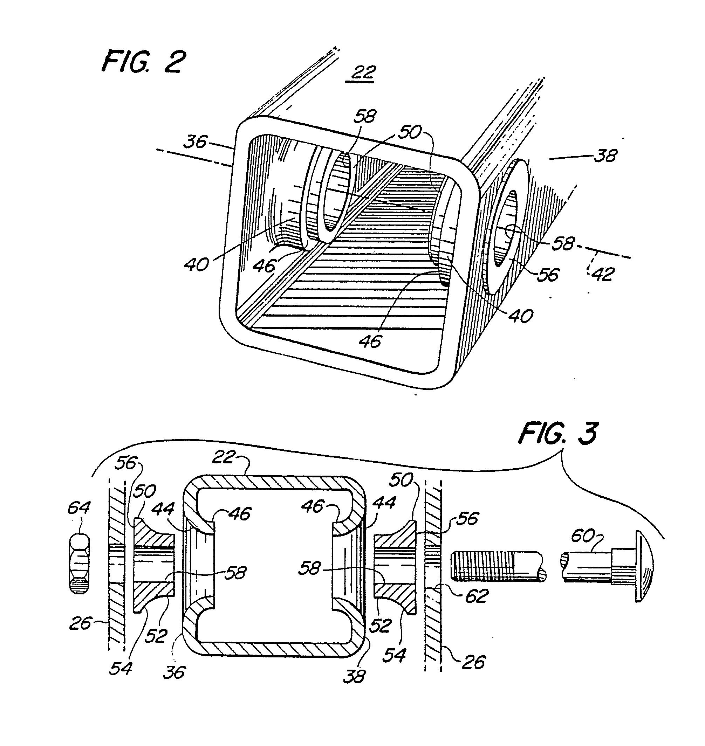

Die parallelen Lenker 22 und 24 sind im wesentlichen gleich und sind jeweils aus einem rohrförmigen Stangenmaterial von quatratischem Querschnitt hergestellt, welches sich im Abstand gegenüberliegende Seitenwände 36 und 38 aufweist. In den Seitenwänden 36 und 38 sind zwei in Fluchtung zueinander geordnete Lagerausnehmungen 40 ausgebildet, und zwar im dargestellten Beispiel nahe den Enden des Lenkers. Die Lagerausnehmungen 40 sind in bezug auf eine Querachse 42 zentriert. Bei dem Ausführungsbeispiel nach Fig. 2 und 3 ist der Umfang jeder Lagerausnehmung ganz erheblich im Vergleich zu den Abmessungen der Seitenwände 36, 38 senkrecht zur Längsrichtung des Lenkers. Jede Lagerausnehmung 40 ist auf die Weise hergestellt, daß zuerst eine Vorbohrung in der Seitenwand erzeugt wird. Der gebohrte Bereich wird dann auf dem Wege des Zieh- oder Stauchpressens in das Innere des Lenkers 22 lippenförmig ausgeformt. Dabei wird ein nach außen weisender trichterförmiger Bereich 44 mit bevorzugt abgerundetem Verlauf sowie eine ringförmige innere Lippe 46 gebildet. Die Vorbohrung kann geringfügig größer sein als die Hälfte des endgültigen Durchmessers der Lagerausnehmung im Bereich der Lippe.

Geht man beispielsweise von einem Lenker aus rohrförmigem Material von etwa 5 cm Seitenlänge und einer Wanddicke von etwa 4 mm aus, so wird eine Vorbohrung mit einer Weite von etwa 14 mm erzeugt, wenn im Bereich der Lippe die lichte Weite etwa 25 mm betragen soll. Während des Ziehens oder Stauchens des Lochbereiches wird die Lippe relativ gleichförmig und ohne Risse oder dgl. ausgeformt, um eine steife und nach innen gerichtete Stützfläche zu bilden, die bei der Ausführungsform nach Fig. 2 und 3 eine Lagerbuchse 50 aufnimmt.

Die Buchse 50 kann aus einem abnutzungsfesten hitzebehandelten Material bestehen, das ölimprägniert ist. Es weist einen axial nach innen gerichteten zylindrischen Abschnitt 52 auf, dessen Durchmesser im wesentlichen gleich der lichten Weite im Lippenbereich 46 ist. Die Bemessung kann so getroffen sein, daß sich ein fester Sitz im Lippenbereich 40 ergibt. Die Lagerbuchse 50 ist flanschartig nach außen erweitert, wie dies bei 54 gezeigt ist. Bevorzugt ist der Umfang der Lagerbuchse im Bereich der Erweiterung der trichterförmigen und abgerundeten Gestalt des Abschnittes 44 der Lagerausnehmung 40 angepaßt. Die Lagerbuchse 50 wird in die Lagerausnehmung 40 zweckmäßigerweise eingepreßt und zwar so weit, daß die axial nach außen gerichtete Stirnfläche 56, die bevorzugt flach ausgebildet ist, im wesentlichen mit der Außenfläche der Seitenwand 36 oder 38 bündig liegt oder gegenüber dieser geringfügig versetzt ist, wie dies Fig. 2 zeigt. Die Lagerbuchse 50 erstreckt sich axial nach innen über die innere Stirnfläche 46 der Lippe 40 hinaus und umfaßt eine kreisförmige Bohrung 58, deren Achse mit der Achse 42 korrespondiert. Zwei Buchsen 50 sind an jeder Gelenkstelle axial in Fluchtung so angeordnet, daß sie gemeinsam den Schaft des Verbindungs- und Gelenkbolzen 60 aufnehmen. Die axiale Länge jeder Buchse beträgt etwa 14 mm, während der zylindrische Abschnitt 52 sich über die Stirnfläche der Lippe um etwa 6 mm nach innen hinaus erstreckt.

In der bevorzugten Ausführungsform wird der Bolzen 60 durch Bohrungen 62 in den Kupplungsplatten 26 oder Flanschen oder Haltern 16 oder anderen Teilen des Gerätes gesteckt, sowie durch miteinander fluchtende Lagerbuchsen 50 in den Lenkern 22 oder 24. Eine aus Stahl bestehende Verriegelungsmutter 64 von vorbestimmtem Drehmoment ist auf den Bolzen 60 aufgeschraubt, um die Enden des Lenkers zwischen den Platten einzufassen. Die Mutter 64 wird ausreichend festgezogen, um zu verhindern, daß ein Seitenspiel auftritt, während jedoch eine gute Schwenkbewegung des Lenkers in bezug auf die Platten sichergestellt bleibt. Der Bolzen 60 kann gegenüber den Buchsen 50 relativ schwenken, und zwar als Lenkerschwenkzapfen.

Die beschriebene Lagerausbildung mit den Buchsen 50 liefert im wesentlichen gleiche Widerstände gegenüber seitlichem Spiel wie übliche geschweißte Anordnungen mit einer einzigen Buchse, die sich vollständig quer durch den rohrförmigen Lenker erstreckt. Sie ist jedoch wesentlich billiger und wesentlich schneller und leichter herzustellen und zu montieren und wesentlich leichter zu reparieren.

Der Bereich des rohrförmigen Lenkers, in dem die lippenförmigen Lagersitze gebildet werden, ist zweckmäßigerweise wärmebehandelt, um eine größere Härte und einen höheren Abnutzungswiderstand zu erhalten.

Bei einem anderen Ausführungsbeispiel (nicht gezeigt), das ähnlich der Figur 3 ist, wird eine relative Drehung zwischen der Lagerbuchse 50 und dem Zapfen 60 durch eine Nut-Keilverbindung (nicht gezeigt) oder eine ähnliche Anordnung verhindert, so daß eine Relativbewegung in Drehrichtung der Lagerbuchse gegenüber den Bolzen nicht stattfindet. In diesem Fall kann die Lagerbuchse in der Lagerausnehmung und den Lippen 40 relativ drehen, statt wie bei dem Ausführungsbeispiel nach Fig. 2 und 3 drehfest in die Lagerausnehmungen eingepreßt zu sein. Entsprechend muß die Lagerausnehmung 40 bearbeitet oder gesäubert sein, um eine glatte gleichförmige Lagerfläche darzubieten, die nicht Anlaß zu einer vorzeitigen Abnutzung der Lagerfläche der Buchsen 50 gibt.

## Patentansprüche

1. Langgestreckter Lenker (22, 24) oder dgl., insb. an landwirtschaftlichen Geräten, in Form eines Hohlprofils mit wenigstens zwei sich gegenüberliegenden und zueinander parallelen Seitenwänden (36, 38) von gegenüber ihrem gegenseitigen Abstand kleiner Wanddicke, bei dem paarweise in Fluchtung miteinander stehende ringförmige Lippen (40) zur Aufnahme eines Schwenk- oder Verbindungszapfens (60) oder dgl. unmittelbar aus den sich gegenüberliegenden Seitenwänden (36, 38) ausgeformt sind, deren freie Stirnflächen (46) einander zugewandt sind und einen gegenseitigen Abstand aufweisen, der kleiner ist als der gegenseitige Innenabstand der Seitenwände, und die sich tangential von der Außenfläche der Seitenwände (36, 38) aus in Richtung nach innen entlang einer gekrümmten Erzeugenden trichterförmig zu einem zylindrischen Innenabschnitt (46) verengen, dadurch gekennzeichnet, daß in jede ringförmige Lippe (40) eine Lagerbuchse (50) zur Aufnahme des Schwenk- oder Verbindungszapfens (60) oder dgl. einsetzbar ist, deren achsial äußere Stirnfläche (56) mit der Außenfläche der Seitenwand (36, 38) bündig liegt, deren dieser Stirnfläche nahe Außenumfang (54) dem Umriß der trichterförmigen Verengung (44) entsprechend ausgebildet ist und der nahe seiner inneren Stirnfläche einen über die Stirnfläche der Lippe (40) nach innen vorspringenden zylindrischen Abschnitt (52) aufweist.

2. Lenker nach Anspruch 1, dadurch gekennzeichnet, daß die Lagerbuchse (50) einen maximalen Durchmesser aufweist, der größer als die Hälfte der Abmessung des Lenkers (22) ist, gemessen senkrecht zur Längsrichtung des Lenkers.

3. Lenker nach Anspruch 1, dadurch gekennzeichnet, daß die Lagerbuchse (50) ein einstückiger Teil aus einem ölimprägnierten abnutzungsfesten Material ist.

4. Lenker nach einem der Ansprüche 1 bis 3, dadurch gekennzeichnet, daß der Schwenk- oder Verbindungszapfen (60) undrehbar in der Lagerbuchse (50) aufgenommen und Letztere drehbar in der ringförmigen Lippe (40) angeordnet ist.

## Claims

1. An elongate link (22, 24) or the like, in particular on agricultural implements, in the form of a hollow member having at least two oppositely disposed and mutually parallel side walls (36, 38) of small wall thickness in relation to their mutual spacing, wherein annular lips (40) which are disposed in alignment with each other in pairs, for receiving a pivot or connecting pin (60) or the like are formed directly from the oppositely disposed side walls (36, 38), the free end faces (46) of said lips facing towards each other and being at a spacing from each other which is less than the internal spacing between the side walls and the lips decreasing in width in a funnel-like configuration tangentially from the outside surface of the side walls (36, 38) inwardly along a curved generatrix to a cylindrical inner portion (46), characterised in that a bearing bush (50) for receiving the pivot or connecting pin (60) or the like can be fitted into each annular lip (40), the axially outward end face (56) of the bearing bush being flush with the outside surface of the side wall (36, 38), the outside periphery (54) of the bearing bush, adjacent said end face, being of a configuration corresponding to the contour of the funnel-like reduction portion (44) and the bearing bush having, adjacent its inner end face, a cylindrical portion (52) which projects inwardly beyond the end face of the lip (40).

2. A link according to claim 1 characterised in that the bearing bush (50) has a maximum diameter which is larger than half the dimension of the link (22), as measured normal to the longitudinal direction of the link.

3. A link according to claim 1 characterised in that the bearing bush (50) is a one-piece component comprising an oil-impregnated wear-resistant material.

4. A link according to one of claims 1 to 3 characterised in that the pivot or connecting pin (60) is non-rotatably received in the bearing bush (50) and the latter is arranged rotatably in the annular lip (40).

## Revendications

1. Biellette de forme allongée (22, 24) ou élément analogue, en particulier pour machines ou instruments agricoles, en forme de profilé creux comportant au moins deux parois latérales (36, 38) opposées et parallèles entre elles, ayant une faible épaisseur de paroi par rapport à leur écartement relatif, dans laquelle des lèvres (40) de forme annulaire alignées entre elles par paires sont ménagées par formage directement à partir des parois latérales (36, 38) opposées l'une à l'autre pour la réception d'un axe de pivotement ou de liaison (60) ou analogue, les surfaces terminales libres (46) de ces lèvres étant dirigées l'une vers l'autre et présentant entre elles un écartement relatif qui est inférieur à l'écartement relatif intérieur entre les parois latérales, ces lèvres allant en se rétrécissant en partant tangentiellement de la surface extérieure des parois latérales (36, 38) en direction de l'intérieur, en forme d'entonnoir, selon une génératrice curviligne, jusqu'à une partie intérieure cylindrique (46), caractérisée en ce qu'une douille-palier (50) destinée à recevoir l'axe de pivotement ou de liaison (60) ou l'élément analogue peut être insérée dans chaque lèvre (40), l'extrémité (56) dirigée axialement vers l'extérieur de cette douille-palier affleurant la surface extérieure de la paroi latérale (36, 38), sa périphérie extérieure (54) voisine de cette extrémité étant conformée de manière à correspondre au contour de l'étranglement (44) en forme d'entonnoir, et ladite douille-palier présentant au voisinage de sa face terminale intérieure une partie (52) cylindrique faisant saillie vers l'intérieur au-delà de la face terminale de la lèvre (40).

2. Biellette suivant la revendication 1, caractérisée en ce que la douille-palier (50) présente un diamètre maximum qui est supérieur à la moitié de la dimension de la biellette (22) mesurée perpendiculairement à la direction longidutinale de cette biellette.

3. Biellette suivant la revendication 1, caractérisée en ce que la douille-palier (50) est constituée par une pièce d'un seul tenant en un matériau résistant à l'usure imprégné d'huile.

4. Biellette suivant l'une quelconque des revendications 1 à 3, caractérisée en ce que l'axe de pivotement ou de liaison (60) est bloqué angulairement dans la douille-palier (50) et en ce que cette dernière est montée à rotation dans la lèvre annulaire (40).

FIG. I

**FIG. 2**

**FIG. 3**